# FASCICULE DE BREVET EUROPEEN

(11) **EP 1 878 946 B1**
(45) Date de publication et mention de la délivrance du brevet: **25.08.2010**
(21) Numéro de dépôt: 07112389.7
(22) Date de dépôt: 12.07.2007
(51) Int. Cl.: F16H 21/46

(54) **Mécanisme d'entraînement d'une charge en rotation selon deux axes**
Mechanismus zum Drehantrieb einer Last um zwei Achsen
Mechanism for powering the rotation of a load according to two axes

(30) Priorité: 13.07.2006 FR 0652956
(43) Date de publication de la demande: 16.01.2008
(73) Titulaire: THALES, 92200 Neuilly sur Seine (FR)
(72) Inventeur: Barbet, Vincent, 06550 La Roquette sur Siagne (FR); Baudasse, Yannick, 06130 GRASSE (FR)
(74) Mandataire: Esselin, Sophie

(56) Documents cités:
- FR-A- 2 572 981
- FR-A- 2 760 832
- FR-A1- 2 185 867
- GB-A- 2 266 022

## Description

La présente invention concerne un mécanisme d'entraînement d'une charge en rotation selon deux axes. Plus particulièrement l'invention permet d'entraîner une charge en rotation illimitée autour d'un premier axe et en rotation limitée autour d'un second axe relativement au premier axe sans nécessiter l'emploi d'un joint tournant.

Il est connu dans le domaine des systèmes de positionnement en rotation selon deux degrés de liberté de disposer un premier moteur entraînant en rotation un équipage mobile relativement à un massif immobile. Sur cet équipage mobile est disposé un second moteur entraînant en rotation la charge que l'on souhaite mobiliser relativement au premier degré de liberté. Un tel mécanisme d'entraînement est divulgué dans le document GB 2 266 022 A et contient les caractéristiques du préambule de la revendication 1. Un tel agencement où le second moteur est embarqué nécessite que la connectique tant de puissance que de commande dudit second moteur "traverse" la première rotation. Il est possible de prévoir une certaine flexibilité de cette connectique qui "s'enroule" alors autour du premier axe, autorisant ainsi une rotation limitée, dans la mesure de ladite flexibilité. Lorsqu'il est souhaité que la première rotation soit d'amplitude illimitée il convient d'utiliser un joint tournant assurant la transmission des signaux au travers de la première rotation. Quelle que soit la technologie (électrique, hydraulique, pneumatique, etc) utilisée, un joint tournant présente des contraintes de contact limitant drastiquement sa durée de vie. Ainsi un joint tournant hydraulique utilise des joints frotteurs ou racleurs afin d'assurer une étanchéité en mouvement. Un joint tournant électrique utilise des balais ou autres dispositifs frotteurs. Ces éléments, de par le frottement fonctionnel, sont voués à une usure rapide et à une durée de vie faible.

Le besoin existe par conséquent d'un dispositif d'entraînement en rotation selon deux axes, dont le premier axe permette une rotation illimitée et pouvant être construit sans devoir employer un joint tournant.

La présente invention remédie à ces différents inconvénients.

L'invention a pour objet un mécanisme d'entraînement d'une charge en rotation illimitée autour d'un premier axe et en rotation limitée autour d'un second axe relativement au premier axe, conformément à la revendication 1.

Selon une autre caractéristique de l'invention, les axes de rotation desdits premier, deuxième et quatrième pivots sont orthogonaux au premier axe.

Selon une autre caractéristique de l'invention, ledit troisième pivot comporte un évidemment dans lequel l'arbre rotatif traverse le troisième pivot.

Selon une autre caractéristique alternative de l'invention, ledit arbre rotatif comporte un évidemment dans lequel le troisième pivot traverse l'arbre rotatif.

Selon un mode de réalisation de l'invention le mouvement relatif de l'arbre rotatif et du troisième pivot est glissant.

Selon une autre caractéristique de l'invention, les stators du moteur rotatif et du moteur linéaire partagent une interface thermique commune.

Un tel arrangement est rendu possible par le fait que le moteur linéaire est immobile relativement au moteur rotatif, puisque non embarqué sur l'équipage mobile intermédiaire entraîné par le moteur rotatif. Cet arrangement permet avantageusement une centralisation de la gestion thermique des deux moteurs.

Selon une autre caractéristique de l'invention, le moteur linéaire comprend un moteur rotatif et un ensemble vis et écrou.

Selon une autre caractéristique de l'invention, la charge est un miroir.

Selon une autre caractéristique de l'invention, la charge est un réflecteur d'antenne.

L'invention concerne encore l'application d'un mécanisme selon l'un quelconque des modes de réalisation précédents à un scanner optique deux axes.

D'autres caractéristiques, détails et avantages de l'invention ressortiront plus clairement de la description détaillée donnée ci-après à titre indicatif en relation avec des dessins sur lesquels :
- la figure 1 présente un schéma de principe cinématique de mécanisme selon l'invention,
- la figure 2 présente un schéma de principe cinématique de mécanisme selon une première variante de réalisation de l'invention,
- la figure 3 présente un schéma de principe cinématique de mécanisme selon une deuxième variante de réalisation de l'invention,
- les figures 4, 5 et 6 présentent respectivement une vue coupée de face, une vue coupée de coté et une vue en perspective d'un premier mode de réalisation de l'invention,
- les figures 7, 8 et 9 présentent respectivement une vue coupée de face, une vue coupée de coté et une vue en perspective d'un second mode de réalisation de l'invention.

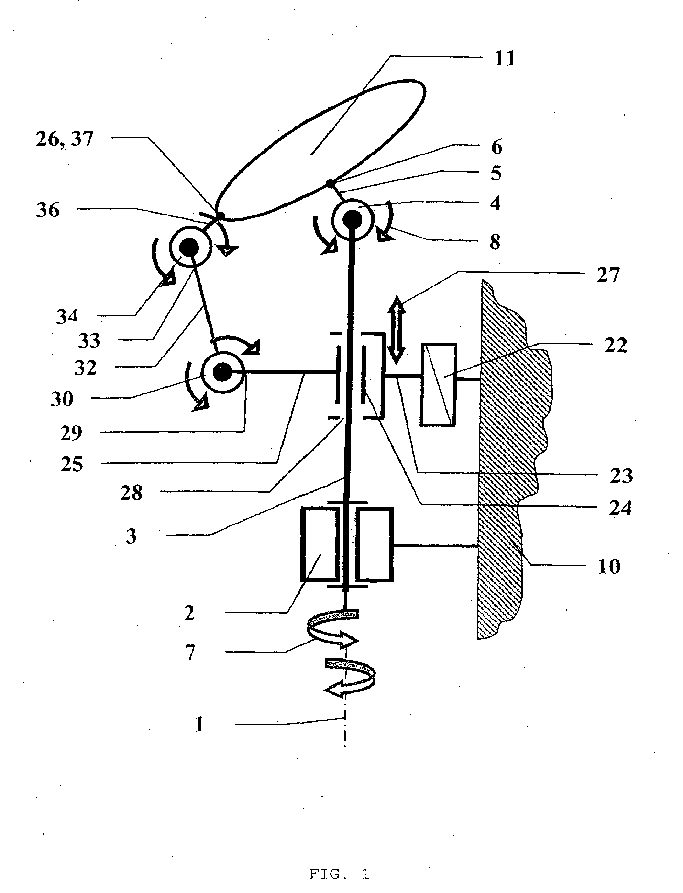

La figure 1, présente un schéma de principe cinématique de l'invention. Le mécanisme est destiné à entraîner une charge 11 en rotation selon deux axes non confondus. Un premier axe 1 est représenté vertical sur la figure. Un second axe (non représenté) est sécant au plan de la figure. L'entraînement de la charge 11 selon un premier degré de liberté de rotation 7, autour du premier axe 1, est obtenu par un moteur rotatif 2. Ce moteur rotatif 2, pouvant tourner dans l'un ou l'autre des sens de rotation, peut être de toute technologie connue : hydraulique, pneumatique, électrique, etc. Le moteur rotatif 2, dont le stator est fixe par rapport à un bâti ou massif 10 de référence, entraîne la charge 11 au moyen d'un arbre rotatif 3, 4, 5. Une des extrémités dudit arbre rotatif 3, 4, 5 est solidaire en rotation du rotor du moteur rotatif 2. L'autre extrémité est solidaire de la charge 11 en un premier point 6. La rotation 7 est avantageusement illimitée en amplitude.

Alors que les mécanismes de l'art antérieur embarquent le moteur d'entraînement du second degré de liberté sur l'équipage mobilisé par le moteur du premier degré de liberté, une des caractéristiques essentielles de l'invention est de conserver le moteur du second degré de liberté, ici un moteur linéaire 22 fixe relativement au bâti 10.

L'entraînement de la charge 11 selon un second degré de liberté de rotation 8, autour du second axe 21, est réalisé par la coopération du moteur linéaire 22 et d'un dispositif comprenant des bras 23, 25, 32, 35 et des liaisons pivots 24, 30, 34. Le moteur linéaire 22 entraîne en translation selon une direction 27 parallèle au premier axe 1 ledit dispositif bras/pivots. Ce dispositif comprend un premier bras 23, 24, 25 composé de plusieurs parties détaillées ci-dessous. L'extrémité 29 de ce premier bras s'articule au moyen d'un premier pivot 30 avec un second bras 32 dont l'extrémité 33 s'articule à son tour au moyen d'un second pivot 34 avec un troisième bras 36 dont l'extrémité 37 est fixée à la charge 11 en un deuxième point 26. Ce deuxième point 26 est disposé distinct du deuxième axe de telle sorte qu'il existe un bras de levier fonctionnel entre ces deux éléments.

L'arbre rotatif 3, 4, 5 tourne et entraîne autour du premier axe 1 la charge 11. Le moteur linéaire 22 et une première partie 23 du premier bras 23, 24, 25 qu'il entraîne en translation 27 ne tournent pas avec le premier degré de liberté. La charge 11 et le dispositif bras/pivots solidaires par le point 26 tournent avec le premier degré de liberté. Il en résulte que le premier bras 23, 24, 25 croise nécessairement l'arbre rotatif 3. Le premier bras 23, 24, 25 assure la liaison entre le moteur linéaire 22 qui ne tourne pas et le dispositif bras/pivots solidaire de la charge 11 qui tourne avec elle. Ceci est rendu possible par la constitution en deux parties 23, 25 du premier bras. Une première partie 23 est solidaire du moteur linéaire 22 et ne tourne pas alors qu'une seconde partie 25 est solidaire du dispositif et tourne. Ces deux parties 23, 25 sont articulées entre elles au moyen d'un troisième pivot 24, dont l'axe se confond avec le premier axe 1. Ce troisième pivot 24 est tel que la deuxième partie 25 puisse librement tourner relativement à la première partie 23. Cependant ce troisième pivot 24 est aussi tel qu'une translation 27 appliquée à la première partie 23 du premier bras soit transmise au troisième pivot 24 et à la deuxième partie 25.

Avantageusement, le troisième pivot 24 est localisé à l'endroit du croisement entre l'arbre rotatif 3 et le premier bras 23, 24, 25.

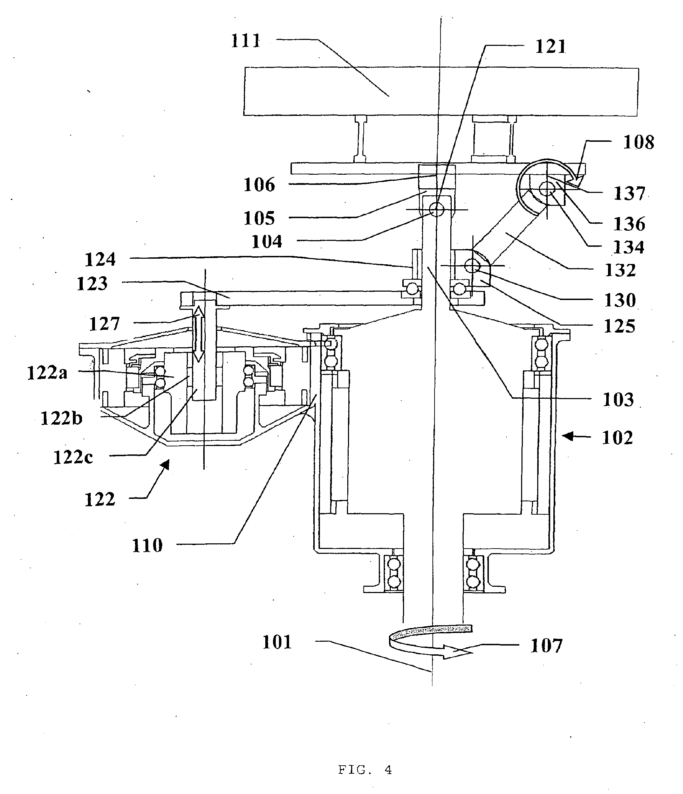

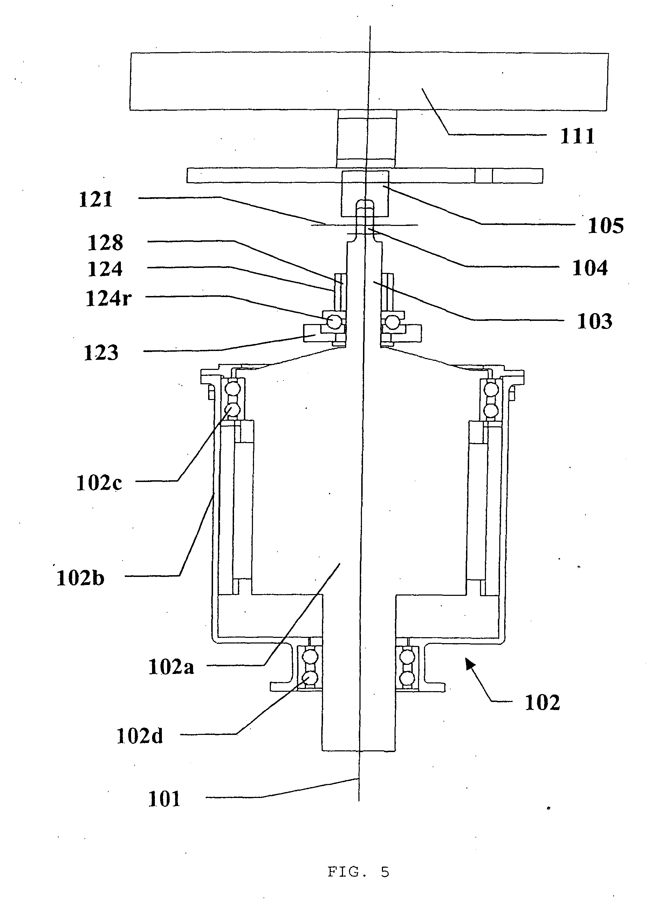

Avantageusement encore ce troisième pivot 24 comporte un évidement 28 en son centre afin de pouvoir être traversé par l'arbre rotatif 3. Ceci permet avantageusement une libre rotation de l'arbre rotatif 3. La translation 27 induite par l'actionneur linéaire 22 étant de direction parallèle au premier axe 1 et donc parallèle à l'arbre rotatif 3, le premier bras 23, 24, 25 peut aussi se translater sans interférer avec l'arbre rotatif 3, 4, 5. Ceci est particulièrement illustré par le premier mode de réalisation correspondant aux figures 4,5 et 6.

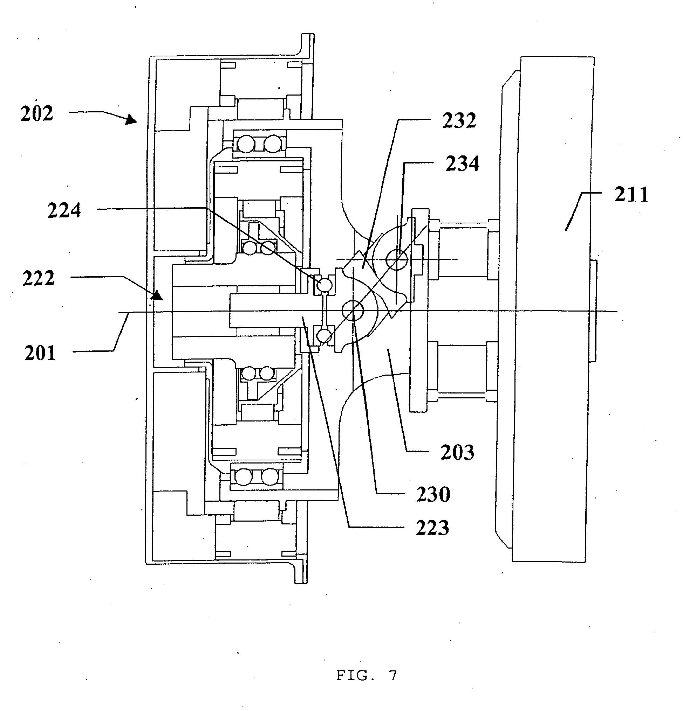

Alternativement l'arbre rotatif 3 est creux ou comporte un évidement en son centre afin de pouvoir être traversé par le troisième pivot 24. Ceci permet avantageusement une libre rotation de l'arbre rotatif 3 et une translation 27 relative entre l'arbre rotatif 3 et ledit troisième pivot 24. Ceci est particulièrement illustré par le second mode de réalisation correspondant aux figures 7, 8 et 9.

L'arbre rotatif 3, 4, 5 est selon une première réalisation, articulé en deux parties 3, 5 reliés par un quatrième pivot 4 dont l'axe se confond avec et définit le deuxième axe. Ce deuxième axe n'est pas confondu avec le premier axe 1 et le quatrième pivot 4 n'affecte pas la rotation 7 du premier degré de liberté qu'il contribue à transmettre à la charge 11. Ce quatrième pivot 4 est disposé en aval du troisième pivot 24, entre ce dernier et la charge 11. Ainsi la charge 11 peut tourner autour du second axe 21 grâce à la mobilité conférée par le quatrième pivot 4. Les axes de rotation respectivement du premier 30, du deuxième 34 et du quatrième pivot 4 sont parallèles entre eux. Il en résulte que le mouvement de translation 27 créé par l'actionneur linéaire 22 produit, par l'action combinée des bras et des pivots, une rotation 8 de la charge 11 autour du second axe par l'intermédiaire du bras de levier précédemment cité entre le points 26 et le second axe.

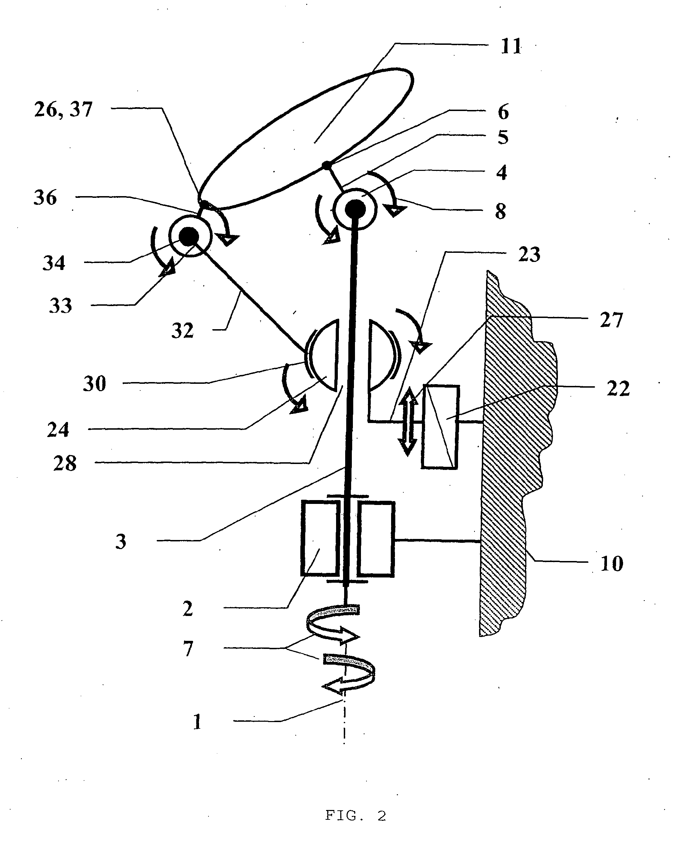

Selon une première variante avantageuse, représentée à la figure 2, le premier pivot 30 peut être confondu avec le troisième pivot 24. Une telle variante supprime la deuxième partie 25 du premier bras.

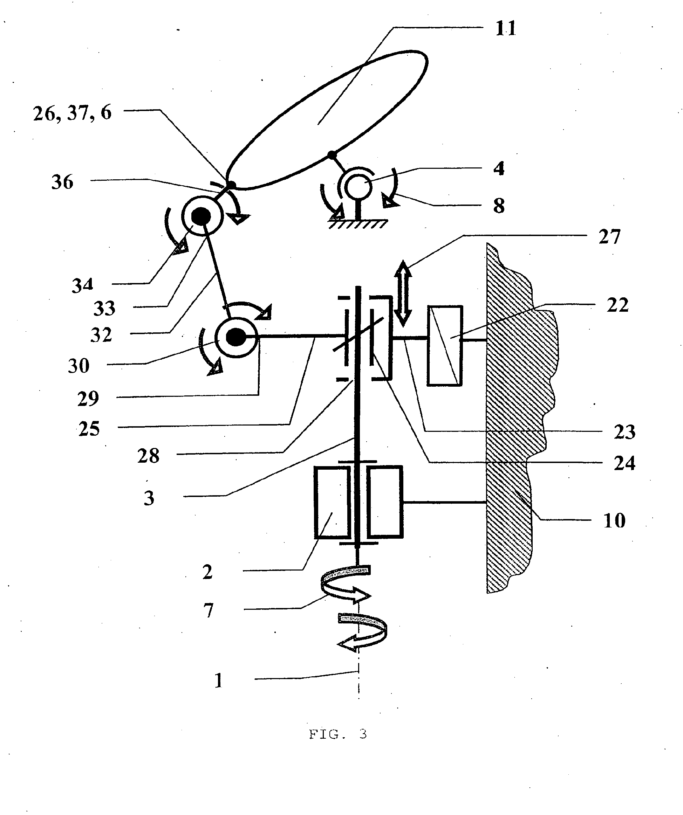

Selon une seconde variante avantageuse, représentée à la figure 3, l'arbre rotatif 3 entraîne en rotation directement le dispositif bras/pivots. La liaison 24 est alors prévue pour solidariser en rotation le premier bras 25 avec l'arbre rotatif 3. Le point 6 se confond alors avec le point 26 et la seconde partie 5 est remplacée par le dispositif bras/pivots. L'articulation 4 reste nécessaire et présente un degré de liberté selon le second axe de rotation 21 relativement à une référence fixe. Elle Présente de plus un degré de liberté autour du premier axe 1. Cette articulation 4 est alors une rotule 4.

Selon un mode de réalisation particulièrement intéressant les axes de rotation desdits premier 30, deuxième 34 et quatrième pivot 4 sont orthogonaux au premier axe 1.

Selon une première configuration, l'évidemment 28 du troisième pivot 24, respectivement l'évidement de l'arbre rotatif 3, est suffisamment large pour être traversé par l'arbre rotatif 3, respectivement le troisième pivot 24, en mouvement sans risque d'interférence. Selon une seconde configuration alternative, l'évidement est ajusté glissant, afin de permettre le mouvement relatif de translation du troisième pivot 24 du premier bras 23, 24, 25 et de l'arbre rotatif 3. Un tel glissement s'entend en termes cinématiques et ne préjuge ni de la technologie utilisée ni de la tolérance mise en oeuvre.

Plusieurs possibilités sont offertes. Un manchon glissant constituant le troisième pivot 24 peut être solidaire de la première partie 23 du bras. Fixe relativement au bâti 10, il doit alors permettre une liaison pivot glissante avec l'arbre rotatif 3 et une autre liaison pivot avec la deuxième partie 25 du bras.

Selon une possibilité alternative avantageuse, ledit manchon peut être solidaire en rotation de l'arbre rotatif 3 et de la seconde partie 25 du bras, qui tournent ensemble autour du premier axe 1. Le manchon est en liaison glissière avec l'arbre 3 afin d'autoriser la transmission de la translation 27 de la première partie 23 au troisième pivot 24 et à la seconde partie 25 du premier bras. Une configuration analogue est envisageable lorsque le pivot 24 traverse l'arbre rotatif évidé 3.

Il résulte de la disposition des différents éléments que la rotation du deuxième degré de liberté autour du deuxième axe présente une amplitude limitée.

L'invention permet avantageusement, grâce au mécanisme décrit précédemment de disposer le moteur 22 du deuxième degré de liberté fixe relativement au bâti 10. Ceci présente plusieurs avantages. Le premier est de simplifier les connexions de ce moteur aux différents réseaux de puissance et de commande. Ainsi même avec une rotation illimitée 7 du premier degré de liberté, il n'est pas nécessaire d'utiliser un joint tournant. Un tel joint tournant s'usant rapidement, il en résulte un important gain en terme de durée de vie du mécanisme complet avec les avantages induits lorsqu'un tel mécanisme est difficilement maintenable comme lorsqu'il est embarqué à bord d'un engin spatial. La durée de vie de l'ensemble devient celle, sensiblement plus importante, des moteurs et/ou des roulements.

Un autre avantage de la fixité du moteur linéaire 22 relativement au bâti 10 est que les deux moteurs 2, 22 peuvent être disposés de manière à partager une interface 10 commune en conductivité thermique par leur châssis fixes ou stators. Une telle interface peut être soit le bâti 10, soit une pièce conçue spécialement pour favoriser les échanges thermiques. Un cas particulièrement simple est un montage sans pièce d'interface avec les deux moteurs 2, 22 en contact direct. Ceci permet avantageusement de simplifier la gestion thermique des motorisations au moyen d'une régulation unique.

Selon un mode de réalisation particulier le moteur linéaire 22 comprend un moteur rotatif couplé avec un ensemble vis et écrou. Le moteur entraîne en rotation la vis ou l'écrou, produisant ainsi une translation de l'écrou ou de la vis, ce dernier étant empêché de tourner.

On peut remarquer que l'arbre rotatif 3 au niveau du moteur rotatif 2 reste libre (vers le bas de la figure 1) et peut être employé pour entraîner une deuxième charge en rotation selon un ou deux degrés de liberté. Le mécanisme complet peut être reproduit à l'identique en symétrique afin d'entraîner une deuxième charge, les deux mécanismes partageant un unique moteur rotatif 2 pour leur premier degré de liberté en rotation synchrone. De manière analogue, les deux mécanismes peuvent partager un unique moteur linéaire 22 pour leur deuxième degré de liberté, les deux translations étant alors couplées.

Les figures 4, 5 et 6 présentent respectivement une vue coupée de face, une vue coupée de coté et une vue en perspective d'un premier mode de réalisation de l'invention. Les figures 7, 8 et 9 présentent respectivement une vue coupée de face, une vue coupée de coté et une vue en perspective d'un second mode de réalisation de l'invention. Afin de faciliter la lecture de ces figures, un élément référencé x sur la figure 1 est référencé 100+x sur les figures 4, 5 et 6 et respectivement 200+x sur les figures 7, 8 et 9 en accord avec la nomenclature suivante.

| | | | |
|---|---|---|---|
| 1 | 101 | 201 | Premier axe |
| 2 | 102 | 202 | Moteur rotatif |
| 3 | 103 | 203 | Arbre rotatif (1^{ère} partie) |
| 4 | 104 | 204 | Quatrième pivot |
| 5 | 105 | 205 | Arbre rotatif (2^{ème} partie) |
| 6 | 106 | 206 | Premier point |
| 7 | 107 | 207 | Rotation (premier axe) |
| 8 | 108 | 208 | Rotation (deuxième axe) |
| 10 | 110 | 210 | Batî/Interface |
| 11 | 111 | 211 | Charge/Miroir |
| 21 | 121 | 221 | Deuxième axe |
| 22 | 122 | 222 | Moteur linéaire |
| 23 | 123 | 223 | Premier bras (première partie) |
| 24 | 124 | 224 | Troisième pivot |
| 25 | 125 | 225 | Premier bras (deuxième partie) |
| 26 | 126 | 226 | Deuxième point |
| 27 | 127 | 227 | Translation |
| 28 | 128 | 228 | Evidement |
| 29 | 129 | 229 | Extrémité distale (premier bras) |
| 30 | 130 | 230 | Premier pivot |
| 31 | 131 | 231 | Axe du premier pivot |
| 32 | 132 | 232 | Deuxième bras |
| 33 | 133 | 233 | Extrémité distale (deuxième bras) |
| 34 | 134 | 234 | Deuxième pivot |
| 35 | 135 | 235 | Axe du deuxième pivot |
| 36 | 136 | 236 | Troisième bras |
| 37 | 137 | 237 | Extrémité distale (troisième bras) |

Un premier mode de réalisation de l'invention, illustré aux figures 4, 5 et 6 dispose le moteur linéaire 122 juxtaposé latéralement au moteur rotatif 102. La figure 3 montre le moteur rotatif 102 solidaire du moteur linéaire 122 par leur stators au niveau d'une interface commune 110. Ledit moteur rotatif 102 entraîne en rotation 107 l'arbre rotatif 103 solidaire de son rotor. Un pivot 104 articule ledit arbre 103 avec une deuxième partie 105 dudit arbre rotatif, elle même solidaire du miroir 111 au niveau du point 106.

Le moteur linéaire 122 entraîne en translation 127 la première partie du premier bras 123. Ce dernier entraîne en translation le troisième pivot 124 qui lui-même entraîne le dispositif bras/pivots constitué de la deuxième partie du premier bras 125, du deuxième bras 132, du troisième bras 137 et des deux pivots 130, 134. A noter que les deux bras extrêmes 125, 136 voient leur longueur réduite à la seule chape des pivots 130, 136 respectivement.

Dans ce mode de réalisation, le moteur linéaire 102 est réalisé par un moteur rotatif. Le rotor 102a de ce dernier entraîne en rotation une bague filetée 102b qui coopérant avec un filetage disposé sur un axe de sortie 102c mobilise ce dernier selon la translation 127.

L'axe de rotation 121 du deuxième degré de liberté est perpendiculaire au plan de la figure 1 et offre une meilleure visibilité sur la figure 4. Cet axe 121 est matérialisé par le pivot 104 articulant les deux parties de l'arbre rotatif 103, 105. La partie 103 est solidaire du rotor 102a du moteur rotatif 102. Les roulements 102c, 102d permettent la rotation dudit rotor 102a relativement au stator 102b fixe par rapport au bâti du mécanisme complet. On retrouve dans cette vue la première partie du premier bras 123 qui ne tourne pas relativement au bâti et qui entraîne en translation le troisième pivot 124. Ce dernier comprend un roulement 124r qui permet à la seconde partie du premier bras 125 et au reste du dispositif bras/pivots 125, 130, 132, 134, 136 de tourner relativement au bâti en accompagnant le miroir 111 dans sa rotation autour du premier axe 101. Ce même pivot 124 comporte un évidement 128 autorisant le passage de l'arbre rotatif 103 ainsi que la translation du pivot 124 le long dudit arbre 103.

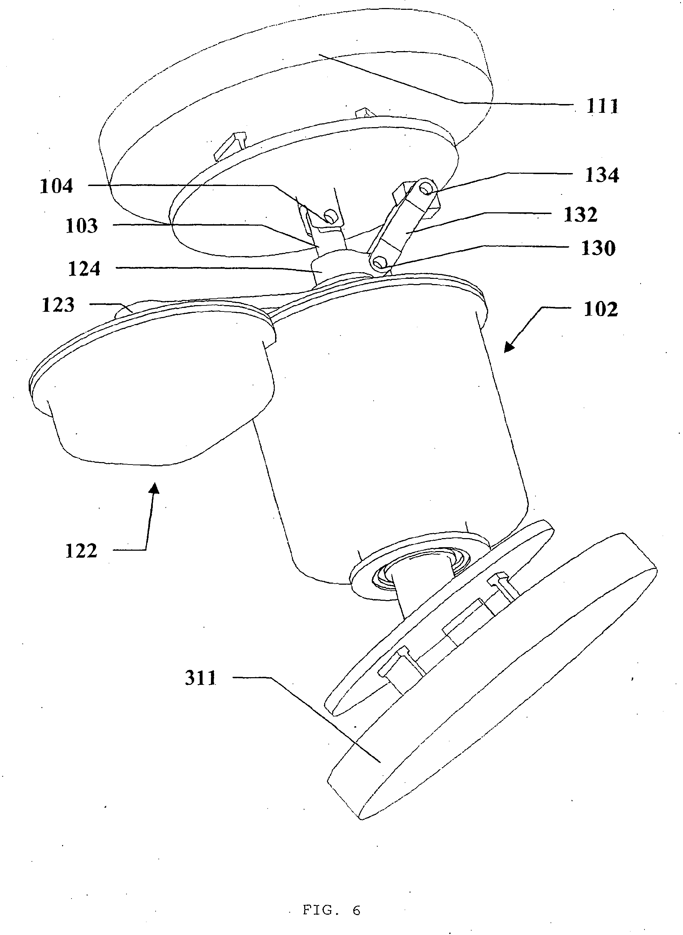

La figure 6 montre le même premier mode de réalisation selon une vue en perspective. Seuls les principaux composants ont été référencés afin de ne pas inutilement surcharger. A noter que la seconde extrémité de l'arbre 103 (débouchant vers le bas de la figure) est avantageusement utilisée pour entraîner en rotation une seconde charge, ici un second miroir 311, de manière synchrone avec le premier miroir 111.

Un second mode de réalisation de l'invention, illustré aux figures 7, 8 et 9 dispose un moteur linéaire 222 au coeur d'un moteur rotatif 202 coaxialement à ce dernier. Une telle configuration permet de confondre le premier axe de rotation 201 avec le mouvement de translation afin de réduire les longueurs des différents bras 223, 232. Il en résulte encore une forte compacité générale du mécanisme. La figure 7 montre bien les composants du deuxième degré de liberté. Un moteur linéaire 222 entraîne en translation un premier bras 223. Il est remarquable que ce dernier se confonde avec l'arbre de sortie dudit moteur linéaire 222 sans comporter le long empattement du bras 123 du premier mode de réalisation. Le dispositif de transmission du mouvement de rotation au miroir 211 autour du deuxième axe de rotation comprend un premier pivot 230, un court deuxième bras 232 et un second pivot 234. Ici encore plus que dans le premier mode de réalisation, le premier bras et le troisième bras se réduisent aux chapes des pivots 230, 234. Un troisième pivot 224 permet la rotation de ce dispositif relativement au premier bras 223. Il est remarquable que, dans ce mode de réalisation contrairement au précédent, ledit pivot se translate à l'intérieur de l'arbre 203, ce dernier présentant un évidement, comme il sera expliqué plus bas.

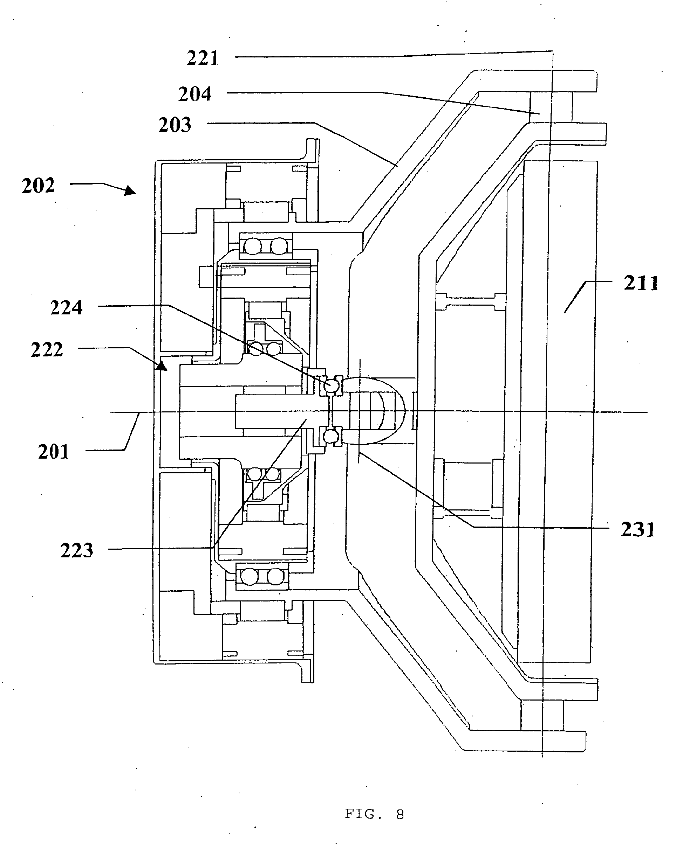

Les composants du premier degré de liberté sont largement masqués du fait de la coupe pratiquée à la figure 7 et apparaissent plus clairement sur la figure 8. Les stators du moteur linéaire 222 et du moteur rotatif 202 sont ici encore solidaires. Des roulements autorisent le rotor du moteur rotatif 202 solidaire de l'arbre rotatif 203 à tourner relativement aux deux stators entre lesquels ledit rotor s'intercale. L'arbre rotatif 203 est creux afin de pouvoir être traversé par le troisième pivot 224. L'arbre rotatif 203 est encore conformé en berceau encadrant le miroir 211 auquel il est fixé via un pivot 204. Cette conformation permet l'entraînement dudit miroir 211 en rotation autour du premier axe 201 tout en autorisant le mouvement relatif en translation du pivot 224. Le pivot 204 rend possible la rotation du miroir 211 autour du deuxième axe 221. L'axe 231 du premier pivot 230 est encore référencé dans cette figure 8 où il est bien visible.

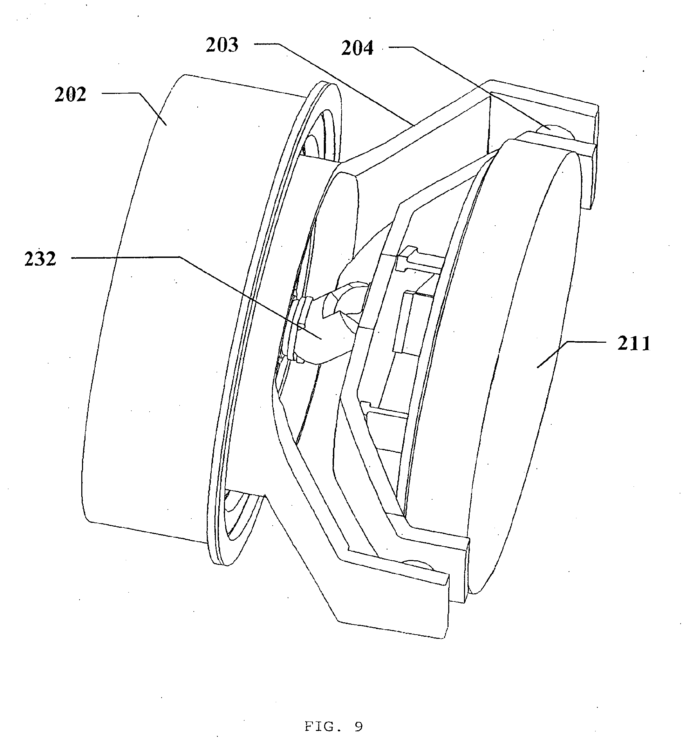

La figure 9 montre le même second mode de réalisation selon une vue en perspective. Seuls les principaux composants ont été référencés afin de ne pas inutilement surcharger.

Le présent mécanisme peut avantageusement être utilisé pour mobiliser toute charge devant être positionnée ou devant réaliser un balayage selon deux degrés de liberté en rotation telle qu'une antenne, un réflecteur d'antenne, un équipement optique tel une caméra ou encore un miroir.

Une application particulièrement avantageuse est la mobilisation du miroir d'un scanner optique deux axes. Dans une telle application un appareil de mesure optique fixe reçoit une image renvoyée par un miroir balayant un champ d'analyse selon deux axes. Le mécanisme selon l'invention permet par exemple de réaliser un balayage en coordonnées polaires (r,θ). Une rotation selon le premier axe 1 permet de faire varier θ alors que la rotation selon le deuxième axe permet une variation de r.

## Revendications

1. Mécanisme d'entraînement d'une charge (11) en rotation illimitée autour d'un premier axe (1) et en rotation limitée autour d'un second axe (121) relativement au premier axe (1), comprenant un moteur rotatif (2) autour du premier axe (1) entraînant dans un mouvement de rotation (7) illimitée autour dudit premier axe (1) un arbre rotatif (3, 4, 5) qui transmet ledit mouvement de rotation (7) à la charge (11) **caractérisé en ce qu'**il comprend un moteur linéaire (22) entraînant en translation selon une direction (27) parallèle au premier axe (1) un premier bras (23, 24, 25) dont l'extrémité (29) s'articule au moyen d'un premier pivot (30) avec un second bras (32) dont l'extrémité (33) s'articule au moyen d'un second pivot (34) avec un troisième bras (36) dont l'extrémité (37) est fixée à la charge (11), ledit premier bras (23, 24, 25) croisant l'arbre rotatif (3) et comprenant au niveau du croisement un troisième pivot (24) autour du premier axe (1), apte à permettre la rotation de l'arbre rotatif (3) et la translation du premier bras (23, 24, 25), ledit mécanisme comprenant encore un quatrième pivot (4) autorisant une rotation de la charge (11) autour du second axe (121), les axes de rotation desdits premier (30), deuxième (34) et quatrième (4) pivots étant parallèles entre eux et non parallèles avec le premier axe (1), afin que la translation (27) produite par l'actionneur linéaire (22) cause une rotation (8) de la charge (11) autour du second axe (121) relativement au premier axe (1).

2. Mécanisme d'entraînement selon la revendication 1, où les axes de rotation desdits premier (30), deuxième (34) et quatrième (4) pivots sont orthogonaux au premier axe (1).

3. Mécanisme d'entraînement selon la revendication 1 ou 2, où le troisième pivot (24) comporte un évidement (28) dans lequel l'arbre rotatif (3) traverse le troisième pivot (24).

4. Mécanisme d'entraînement selon la revendication 1 ou 2, où l'arbre rotatif (3) comporte un évidement dans lequel le troisième pivot (24) traverse l'arbre rotatif (3).

5. Mécanisme d'entraînement selon la revendication 4 ou 5, où le mouvement du troisième pivot (24) relativement à l'arbre rotatif (3) est glissant.

6. Mécanisme d'entraînement selon l'une quelconque des revendications 1 à 5, où les stators du moteur rotatif (2) et du moteur linéaire (22) partagent une interface (10) thermique commune.

7. Mécanisme d'entraînement selon l'une quelconque des revendications 1 à 6, où le moteur linéaire (22) comprend un moteur rotatif et un ensemble vis et écrou.

8. Mécanisme d'entraînement selon l'une quelconque des revendication 1 à 7, où la charge (11) est un miroir.

9. Mécanisme d'entraînement selon l'une quelconque des revendication 1 à 7, où la charge (11) est un réflecteur d'antenne.

10. Application du mécanisme d'entraînement selon l'une quelconque des revendications 1 à 8 à un scanner optique deux axes.

## Claims

1. A mechanism for driving a load (11) into unlimited rotation around a first axis (1) and into limited rotation around a second axis (121) relative to the first axis (1), comprising a rotary motor (2) around the first axis (1) driving a rotary shaft (3, 4, 5) into an unlimited rotation movement (7), around said first axis (1), said rotary shaft transmitting said rotation movement (7) onto the load (11), **characterised in that** it includes a linear motor (22) driving a first arm (23, 24, 25) into a translation movement in a direction (27) parallel to the first axis (1), the end (29) of said first arm being articulated by means of a first pivot (30) with a second arm (32), the end (33) of which is articulated by means of a second pivot (34) with a third arm (36), the end (37) of which is attached to the load (11), said first arm (23, 24, 25) crossing the rotary shaft (3) and including, at the crossing, a third pivot (24) around the first axis (1), which is capable of allowing the rotation of the rotary shaft (3) and the translation of the first arm (23, 24, 25), said mechanism further comprising a fourth pivot (4) authorising the rotation of the load (11) around the second axis (121), the rotation axes of said first (30), second (34) and fourth (4) pivots being parallel to each other and not parallel to the first axis (1), so that the translation (27) produced by the linear actuator (22) causes a rotation (8) of the load (11) around the second axis (121) relative to the first axis (1).

2. The drive mechanism according to claim 1, wherein the rotation axes of said first (30), second (34) and fourth (4) pivots are orthogonal to the first axis (1).

3. The drive mechanism according to claims 1 or 2, wherein the third pivot (24) includes a recess (28) by which the rotary shaft (3) traverses the third pivot (24).

4. The drive mechanism according to claims 1 or 2, wherein the rotary shaft (3) includes a recess by which the third pivot (24) traverses the rotary shaft (3).

5. The drive mechanism according to claims 4 or 5, wherein the movement of the third pivot (24) relative to the rotary shaft (3) is a sliding movement.

6. The drive mechanism according to any one of claims 1 to 5, wherein the stators of the rotary motor (2) and the linear motor (22) share a common thermal interface (10).

7. The drive mechanism according to any one of claims 1 to 6, wherein the linear motor (22) includes a rotary motor and a ballscrew and nut assembly.

8. The drive mechanism according to any one of claims 1 to 7, wherein the load (11) is a mirror.

9. The drive mechanism according to any one of claims 1 to 7, wherein the load (11) is an aerial reflector.

10. An application of the drive mechanism according to any one of claims 1 to 8 to a twin-axes optical scanner.

## Patentansprüche

1. Mechanismus, um eine Last (11) in eine unbegrenzte Drehung um eine erste Achse (1) und in eine begrenzte Drehung um eine zweite Achse (121) relativ zu der ersten Achse (1) zu versetzen, der einen Rotationsmotor (2) um die erste Achse (1) umfasst, der eine Drehwelle (3, 4, 5), die die Drehbewegung (7) auf die Last (11) überträgt, in eine unbegrenzte Drehbewegung (7) um die erste Achse (1) versetzt, **dadurch gekennzeichnet, dass** er einen Linearmotor (22) umfasst, der einen ersten Arm (23, 24, 25), dessen Ende (29) mittels eines ersten Drehgelenks (30) an einem zweiten Arm (32) angelenkt ist, dessen Ende (33) mittels eines zweiten Drehgelenks (34) an einem dritten Arm (36) angelenkt ist, dessen Ende (37) an der Last (11) befestigt ist, in eine Translationsbewegung in einer Richtung (27) parallel zu der ersten Achse (1) versetzt, wobei der erste Arm (23, 24, 25) die Drehwelle (3) überkeuzt und am Überkreuzungspunkt ein drittes Drehgelenk (24) um die erste Achse (1) umfasst, das die Rotation der Drehwelle (3) und die Translation des ersten Arms (23, 24, 25) zulässt, wobei der Mechanismus ferner ein viertes Drehgelenk (4) umfasst, das eine Rotation der Last (11) um die zweite Achse (121) ermöglicht, wobei die Rotationsachsen des ersten (30), zweiten (34) und vierten (4) Drehgelenks parallel zueinander und nicht parallel zur ersten Achse (1) sind, so dass die von dem Linearstellantrieb (22) erzeugte Translation (27) eine Rotation (8) der Last (11) um die zweite Achse (121) relativ zur ersten Achse (1) bewirkt.

2. Antriebsmechanismus nach Anspruch 1, wobei die Rotationsachsen des ersten (30), zweiten (34) und vierten (4) Drehgelenks orthogonal zur ersten Achse (1) sind.

3. Antriebsmechanismus nach Anspruch 1 oder 2, wobei das dritte Drehgelenk (24) eine Aussparung (28) aufweist, durch die die Drehwelle (3) das dritte Drehgelenk (24) überquert.

4. Antriebsmechanismus nach Anspruch 1 oder 2, wobei die Drehwelle (3) eine Aussparung aufweist, durch die das dritte Drehgelenk (24) die Drehwelle (3) überquert.

5. Antriebsmechanismus nach Anspruch 4 oder 5, wobei die Bewegung des dritten Drehgelenks (24) relativ zur Drehwelle (3) eine Gleitbewegung ist.

6. Antriebsmechanismus nach einem der Ansprüche 1 bis 5, wobei die Ständer des Rotationsmotors (2) und des Linearmotors (22) eine gemeinsame thermische Grenzfläche (10) haben.

7. Antriebsmechanismus nach einem der Ansprüche 1 bis 6, wobei der Linearmotor (22) einen Rotationsmotor sowie eine Spindel- und Mutterbaugruppe umfasst.

8. Antriebsmechanismus nach einem der Ansprüche 1 bis 7, wobei die Last (11) ein Spiegel ist.

9. Antriebsmechanismus nach einem der Ansprüche 1 bis 7, wobei die Last (11) ein Antennenreflektor ist.

10. Anwendung des Antriebsmechanismus nach einem der Ansprüche 1 bis 8 auf einen optischen Zweiachsenscanner.
